# DEMANDE DE BREVET EUROPEEN

(11) **EP 2 466 855 A1**
(43) Date de publication de la demande: **20.06.2012**
(21) Numéro de dépôt: 11306696.3
(22) Date de dépôt: 19.12.2011
(51) Int. Cl.: H04L 29/08, H04L 29/06, G06Q 20/00, G07C 1/30, G07C 5/00, H04M 3/51, G07F 17/24, H04L 12/28, G07B 15/00, G07B 15/02

(54) **Système de téléassistance pour le paiement d'une place de stationnement, comprenant un horodateur de stationnement en voirie et un dispositif de téléassistance.**

(30) Priorité: 20.12.2010 FR 1060843
(71) Demandeur: Parkeon, 75015 Paris (FR)
(72) Inventeur: Debac, Olivier, 25000 BESANCON (FR)
(74) Mandataire: Jacobson, Claude

(57) **Abrégé**

Ce système (10) de téléassistance pour le paiement d'une place de stationnement, comprend un dispositif (12) de paiement d'une place de stationnement, le dispositif de paiement (12) comportant un écran (19), des moyens (22) d'affichage de données à l'écran, et un dispositif informatique de téléassistance (14) relié au dispositif de paiement (12) par une liaison de données (15), comportant des moyens (54) de réception de données de fonctionnement issues du dispositif de paiement et des moyens (56) d'émission, à destination du dispositif de paiement (12), de signaux de commande dudit dispositif de paiement.

Le dispositif de téléassistance (14) et le dispositif de paiement (12) comportent chacun un émetteur-récepteur radioélectrique (26, 42), le dispositif de téléassistance (14) et le dispositif de paiement (12) étant reliés par une liaison radioélectrique (15), en l'absence de liaison filaire de données entre le dispositif de téléassistance (14) et le dispositif de paiement (12), et le dispositif de téléassistance (14) comprend des moyens (44) de simulation, à partir des données de fonctionnement reçues, du comportement du dispositif de paiement.

## Description

La présente invention concerne un système de téléassistance pour le paiement d'une place de stationnement, du type comprenant un dispositif de paiement d'une place de stationnement, le dispositif de paiement comportant un écran, des moyens d'affichage de données à l'écran, et un dispositif informatique de téléassistance relié au dispositif de paiement par une liaison de données, comportant des moyens de réception de données de fonctionnement issues du dispositif de paiement et des moyens d'émission, à destination du dispositif de paiement, de signaux de commande dudit dispositif de paiement.

On connaît un système de téléassistance comprenant un dispositif de paiement d'une place de stationnement d'un parc de stationnement fermé et un dispositif informatique de téléassistance relié au dispositif de paiement par une liaison filaire de données. Le dispositif de téléassistance comporte des moyens de réception de données de fonctionnement issues du dispositif de paiement, afin, par exemple, de permettre de diagnostiquer à distance un dysfonctionnement du dispositif de paiement. Le dispositif de téléassistance comporte également des moyens d'émission, à destination dudit dispositif de paiement, de signaux de commande du dispositif de paiement, afin, par exemple, de corriger à distance le dysfonctionnement. Les données de fonctionnement et les signaux de commande transitent par la liaison filaire de données, dont le débit de données important permet la transmission de toutes données sans limitation relative à la taille des paquets de données transmises.

Toutefois, un tel système de téléassistance pour le paiement d'une place de stationnement est prévu uniquement dans le cas du dispositif de paiement dans le parc de stationnement fermé, le dispositif de paiement étant relié au dispositif informatique de téléassistance via la liaison filaire.

Le but de l'invention est de proposer un système de téléassistance pour le paiement d'une place de stationnement, dans le cas d'un dispositif de paiement disposé en voirie, le dispositif de paiement n'étant alors pas relié par une liaison filaire à un dispositif informatique de téléassistance.

A cet effet, l'invention a pour objet un système de téléassistance du type précité, caractérisé en ce que le dispositif de téléassistance et le dispositif de paiement comportent chacun un émetteur-récepteur radioélectrique, le dispositif de téléassistance et le dispositif de paiement étant reliés par une liaison radioélectrique, en l'absence de liaison filaire de données entre le dispositif de téléassistance et le dispositif de paiement, et en ce que le dispositif de téléassistance comprend des moyens de simulation, à partir des données de fonctionnement reçues, du comportement du dispositif de paiement.

Suivant d'autres modes de réalisation, le système de téléassistance comprend une ou plusieurs des caractéristiques suivantes, prises isolément ou suivant toutes les combinaisons techniquement possibles :
- les moyens de simulation sont propres à simuler une image des données affichées par les moyens d'affichage sur l'écran du dispositif de paiement ;
- les moyens de simulation sont propres à simuler l'image des données affichées par les moyens d'affichage sur l'écran du dispositif de paiement, en l'absence de la transmission de l'ensemble desdites données affichées par le dispositif de paiement à destination du dispositif de téléassistance ;
- le dispositif de téléassistance comporte un serveur de téléassistance relié par une liaison Internet à un serveur distant comportant l'émetteur-récepteur radioélectrique, le serveur de téléassistance comportant les moyens de simulation ;
- le système comprend en outre au moins un client web propre à être utilisé par un opérateur de téléassistance, le ou chaque client web étant relié au dispositif de téléassistance par l'intermédiaire du réseau Internet ;
- le dispositif de téléassistance comporte des moyens de transfert, à destination du client web correspondant, de données relatives au comportement simulé par les moyens de simulation ;
- le dispositif de téléassistance comprend des moyens d'envoi d'une requête de l'adresse web du dispositif de paiement ;
- l'adresse web du dispositif de téléassistance est prédéterminée et stockée dans une mémoire du dispositif de paiement ;
- le dispositif de paiement comporte des moyens de transmission de la voix par le protocole de l'internet propres à permettre une communication vocale entre un utilisateur du dispositif de paiement et un opérateur de téléassistance ; et
- le dispositif de paiement est un horodateur de stationnement disposé en voirie.

Ces caractéristiques et avantages de l'invention apparaîtront à la lecture de la description qui va suivre, donnée uniquement à titre d'exemple, et faite en référence aux dessins annexés, sur lesquels :
- la figure 1 est une représentation schématique d'un système de téléassistance selon l'invention, et
- la figure 2 est un organigramme illustrant la téléassistance par un opérateur d'un utilisateur d'un horodateur souhaitant payer une place de stationnement.

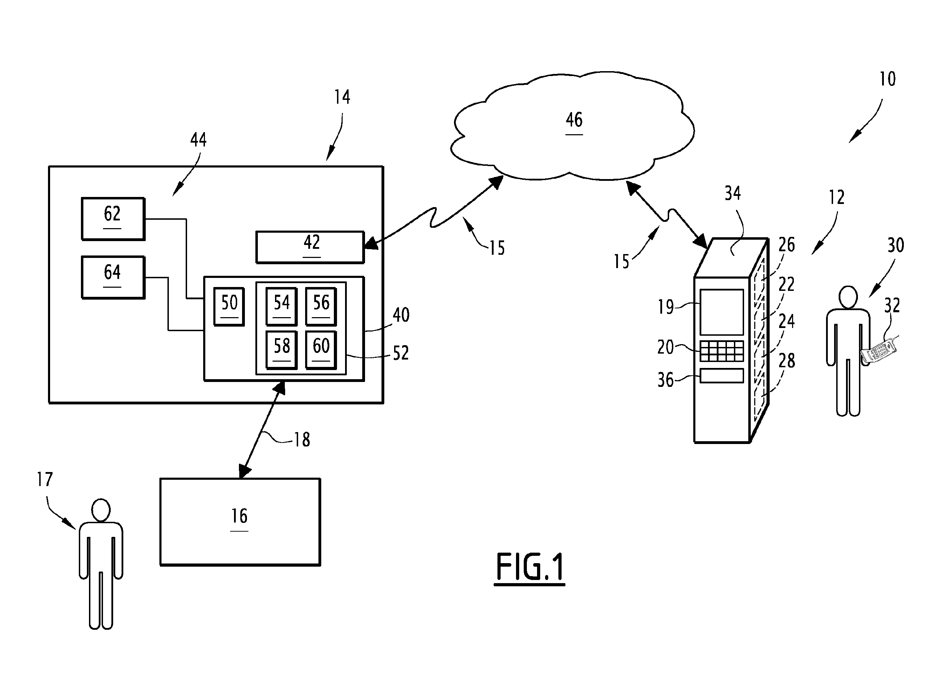

Sur la figure 1, un système 10 de téléassistance pour le paiement d'une place de stationnement comprend un dispositif 12 de paiement d'une place de stationnement et un dispositif informatique 14 de téléassistance relié au dispositif de paiement par une liaison radioélectrique 15, en l'absence de liaison filaire de données entre le dispositif de paiement 12 et le dispositif de téléassistance 14. Le système de téléassistance 10 est, par exemple, dépourvu de liaison filaire de données entre le dispositif de paiement 12 et le dispositif de téléassistance 14.

Dans l'exemple de réalisation de la figure 1, le système de téléassistance 10 comprend également un client web 16 propre à être utilisé par un opérateur de téléassistance 17, le client web 16 étant relié au dispositif de téléassistance 14 par l'intermédiaire du réseau Internet 18 via une liaison Ethernet filaire.

Le dispositif de paiement 12 comporte un écran 19, des moyens 20 de saisie de caractères, et des moyens 22 d'affichage de données à l'écran. Le dispositif de paiement 12 comporte une unité de traitement 24, un émetteur-récepteur radioélectrique 26, et des moyens 28 d'alimentation du dispositif de paiement en énergie électrique. Le dispositif de paiement 12 comporte des moyens, non représentés, d'acceptation de moyens de paiement, tels qu'un sélecteur de monnaie et/ou un lecteur de carte de paiement.

Le dispositif de paiement 12 est disposé en voirie, et est susceptible d'être utilisé par un utilisateur 30 muni d'un téléphone portable 32.

Dans l'exemple de réalisation de la figure 1, le dispositif de paiement 12 ne comporte aucune liaison filaire avec un dispositif extérieur, les moyens d'alimentation 28 comportant une batterie rechargeable, non représentée, propre à être rechargée via un panneau solaire 34 agencé sur le dessus du dispositif de paiement. En variante, le dispositif de paiement 12 est relié à un réseau électrique d'alimentation par l'intermédiaire d'une liaison filaire d'alimentation électrique.

Le dispositif de paiement 12 comporte, par exemple, des moyens 36 de transmission de la voix par le protocole de l'internet (de l'anglais Voice Over Internet Protocol - VOIP) propres à permettre une communication vocale entre l'utilisateur 30 et l'opérateur de téléassistance 17. Les moyens de transmission 36 sont particulièrement utiles dans le cas où l'utilisateur 30 n'est pas muni d'un téléphone portable.

Le dispositif de paiement 12 est, par exemple, un horodateur de stationnement.

Le dispositif de téléassistance 14 (de l'anglais hotline device) comporte une unité de traitement 40, un émetteur-récepteur radioélectrique 42. Le dispositif de téléassistance 14 comporte selon l'invention des moyens 44 de simulation, à partir des données de fonctionnement issues du dispositif de paiement, du comportement du dispositif de paiement 12, notamment d'une image des données affichées par les moyens d'affichage 22 sur l'écran du dispositif de paiement. Le dispositif de téléassistance 14 présente une adresse web, celle-ci étant, par exemple, prédéterminée.

En variante, le dispositif de téléassistance 14 comporte un serveur de téléassistance, non représenté, relié par une liaison Internet à un serveur distant comportant l'émetteur-récepteur radioélectrique 42, le serveur de téléassistance comportant l'unité de traitement 40 et les moyens de simulation 44.

La liaison radioélectrique 15 entre le dispositif de téléassistance et le dispositif de paiement comporte, par exemple, une liaison d'un réseau de téléphonie mobile 46. Le réseau de téléphonie mobile est, par exemple, un réseau GPRS (de l'anglais General Packet Radio Service), ou un réseau UMTS (de l'anglais Universal Mobile Telecommunications System), ou encore un réseau CDMA (de l'anglais Code Division Multiple Access). Le débit de données de la liaison radioélectrique 15 ne permet pas la transmission de l'ensemble des données relatives au comportement du dispositif de paiement échangées à l'intérieur dudit dispositif de paiement.

En variante, la liaison de données entre le serveur de téléassistance et le dispositif de paiement comporte, par exemple, la liaison d'un réseau de téléphonie mobile 46 entre le dispositif de paiement et le serveur distant, puis la liaison Internet entre le serveur distant et le serveur de téléassistance.

Le client web 16 comprend des moyens d'affichage et des moyens d'acquisition d'un ordre de commande de la part de l'opérateur de téléassistance, non représentés. Les moyens d'affichage sont propres à représenter le dispositif de paiement 12 dans son ensemble, c'est-à-dire l'image affichée sur l'écran du dispositif de paiement, ainsi que les informations éventuellement saisies par l'utilisateur. Les moyens d'acquisition sont propres à lancer l'envoi d'un signal de commande au dispositif de paiement 12 par le dispositif de téléassistance 14

L'unité de traitement 24 comporte, par exemple, un processeur de données associé à une mémoire, non représentés. La mémoire est apte à stocker un logiciel de réception d'une requête de l'adresse web du dispositif de paiement, la requête étant issue du dispositif de téléassistance, un logiciel d'émission au dispositif de téléassistance de données de fonctionnement relatives au comportement du dispositif de paiement, et un logiciel de réception de signaux de commande issus du dispositif de téléassistance. La mémoire est également apte à stocker l'adresse web prédéterminée du dispositif de téléassistance 14.

L'émetteur-récepteur radioélectrique 26 est conforme à la norme de téléphonie mobile mise en oeuvre par le réseau de téléphonie 46, telle que la norme GSM (de l'anglais Global System for Mobile communications) avec, par exemple, le service GPRS ou UMTS, ou la norme CDMA.

L'unité de traitement 40 comporte, par exemple, un processeur de données 50 associé à une mémoire 52. La mémoire 52 est apte à stocker un logiciel 54 de réception de données de fonctionnement issues du dispositif de paiement et un logiciel 56 d'émission, à destination du dispositif de paiement 12, de signaux de commande dudit dispositif de paiement. La mémoire 52 est également apte à stocker un logiciel 58 de transfert, à destination du client web 16, de données relatives au comportement simulé par les moyens de simulation, et un logiciel 60 d'envoi d'une requête de l'adresse web du dispositif de paiement.

En variante, les moyens de réception 54, les moyens d'émission 56, les moyens de transfert 58 et les moyens d'envoi 60 sont réalisés sous forme de composants logiques programmables, ou encore sous forme de circuit(s) intégré(s) dédié(s).

Les moyens de réception de données de fonctionnement 54 et les moyens d'émission de signaux de commande 56 sont propres à fonctionner en temps réel.

Les moyens d'émission 56 sont propres à recevoir un ordre d'émission de la part des moyens d'acquisition du client web 16.

L'émetteur-récepteur radioélectrique 42 est conforme à la norme de téléphonie mobile mise en oeuvre par le réseau de téléphonie 46, telle que la norme GSM avec, par exemple, le service GPRS ou UMTS, ou la norme CDMA.

Les moyens de simulation 44 sont propres à simuler le comportement du dispositif de paiement 12, en l'absence de l'ensemble des données relatives au comportement du dispositif de paiement échangées à l'intérieur dudit dispositif de paiement. Les moyens de simulation 44 sont notamment propres à simuler l'image des données affichées par les moyens d'affichage 22 sur l'écran du dispositif de paiement, en l'absence de la transmission de l'ensemble desdites données affichées par le dispositif de paiement 12 à destination du dispositif de téléassistance 14.

Les moyens de simulation 44 comportent, par exemple, un premier simulateur 62 apte à simuler l'image des données affichées par les moyens d'affichage 22, et un deuxième simulateur 64 apte à simuler le comportement du dispositif de paiement 12 à l'exception des images générées par les moyens d'affichage 22.

En variante, les moyens de simulation comportent un simulateur pour chaque dispositif de paiement en cours de téléassistance. Chaque simulateur est alors propre à simuler le comportement du dispositif de paiement téléassisté, y compris les images générées par les moyens d'affichage du dispositif de paiement, uniquement pendant la phase de téléassistance du dispositif de paiement respectif. A l'issue de la phase de téléassistance respective, chaque simulateur est susceptible de simuler le comportement d'un autre dispositif de paiement.

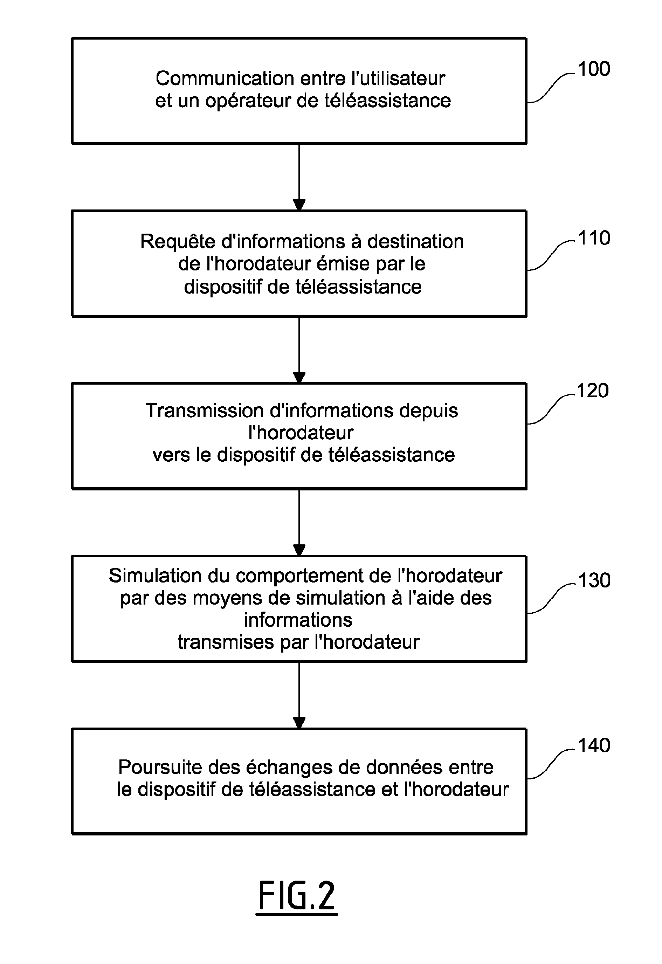

Le fonctionnement du système de téléassistance 10 selon l'invention va désormais être expliqué à l'aide de l'organigramme de la figure 2.

Lorsque l'utilisateur 30 d'un dispositif de paiement a besoin de l'assistance d'une personne pour faire fonctionner le dispositif de paiement, ou bien rencontre un dysfonctionnement sur ledit dispositif de paiement, celui-ci appelle à l'aide de son téléphone mobile 32 l'opérateur de téléassistance 17 (étape 100), le numéro téléphonique de téléassistance étant indiqué sur le dispositif de paiement. En variante, la communication entre l'utilisateur 30 et l'opérateur 17 est établie à l'aide des moyens de transmission de la voix par le protocole de l'internet 36.

Sur commande de l'opérateur 17, le dispositif de téléassistance 14 envoie au dispositif de paiement 12 une requête de son adresse web à l'aide des moyens d'envoi 60 (étape 110). II est nécessaire pour le dispositif de téléassistance de requérir l'adresse web, également appelée adresse IP (de l'anglais Internet Protocol), du dispositif de paiement 12 à chaque fois, puisque celle-ci n'est en effet pas une adresse fixe. Le dispositif de paiement 12 est en effet régulièrement mis en veille afin de préserver l'autonomie de sa batterie d'alimentation électrique.

Le dispositif de paiement 12 transmet alors son adresse IP au dispositif de téléassistance, dont l'adresse IP est prédéterminée et stockée dans la mémoire du dispositif de paiement. Le dispositif de paiement 12 transmet également des données de fonctionnement (étape 120) au dispositif de téléassistance 14 en réponse à sa requête. Les données de fonctionnement transmises par le dispositif de paiement présentent une taille réduite compte tenu du débit de données limité de la liaison radioélectrique 15. Les données de fonctionnement transmises comportent, par exemple, des mots d'état de l'horodateur décrivant de manière codée les états possibles du dispositif de paiement. Les données transmises sur la liaison radioélectrique 15 ne comportent pas l'ensemble des données relatives au comportement du dispositif de paiement échangées à l'intérieur dudit dispositif de paiement.

Les données relatives au comportement du dispositif de paiement comprennent, par exemple, les informations suivantes :
- la valeur et le type de monnaie d'une pièce introduite dans le sélecteur de monnaie,
- le type d'une carte insérée dans le lecteur de carte de paiement,
- la donnée saisie ou la touche validée lors d'une interaction de l'utilisateur avec les moyens de saisie 20,
- l'état de la machine (panne ou défaut en cours, niveau de la batterie rechargeable, niveau de papier lorsque l'horodateur comporte des moyens d'impression),
- l'état de la connexion avec un serveur d'autorisation bancaire, et
- l'état de la connexion avec un serveur de ticket électronique.

Le dispositif de téléassistance 14 simule ensuite, à l'aide des moyens de simulation 44, le comportement du dispositif de paiement (étape 130), les données relatives au comportement simulé étant transférées au client web 16 par les moyens de transfert 58. Le client web 16 reproduit alors le comportement du dispositif de paiement en cours de téléassistance, ce qui permet à l'opérateur 17 d'assister au mieux l'utilisateur 30, le dispositif de téléassistance 14 envoyant si nécessaire au dispositif de paiement 12 des signaux de commande, à l'aide de ses moyens d'émission 56.

Le dispositif de téléassistance 14 et le dispositif de paiement 12 poursuivent leurs échanges de données via la liaison radioélectrique 15 jusqu'à la fin de la phase de téléassistance (étape 140).

En outre, l'opérateur de téléassistance, via son client web 16, exécute une action sur le dispositif de paiement 12, comme par exemple, l'annulation d'une transaction en cours, la réimpression d'un ticket et/ou d'un reçu, le remboursement d'un montant sur une carte de paiement, hors carte bancaire, ou encore la validation d'une touche du dispositif de paiement 12, lorsque l'utilisateur n'est pas en mesure d'effectuer lui-même une telle action.

Le comportement du dispositif de paiement est selon l'invention simulé par les moyens de simulation 44 du dispositif de téléassistance en l'absence de l'ensemble des données relatives au comportement du dispositif de paiement échangées à l'intérieur dudit dispositif de paiement. Ceci permet de reproduire à distance le comportement du dispositif de paiement malgré le débit de données limité de la liaison radioélectrique 15. Les moyens de simulation 44 permettent ainsi de proposer une téléassistance pour le paiement d'une place de stationnement en l'absence de liaison filaire de données entre le dispositif de téléassistance 14 et le dispositif de paiement 12.

Le client web 16 permet à l'opérateur de téléassistance d'intervenir depuis un ordinateur classique relié au réseau Internet, sans être nécessairement à proximité du dispositif de téléassistance 14.

On conçoit ainsi que le système de téléassistance selon l'invention permet de proposer une téléassistance pour le paiement d'une place de stationnement, dans le cas d'un dispositif de paiement autonome disposé en voirie, le dispositif de paiement n'étant alors pas relié par une liaison filaire à un dispositif informatique.

## Revendications

1. Système (10) de téléassistance pour le paiement d'une place de stationnement, du type comprenant :
- un dispositif (12) de paiement d'une place de stationnement, le dispositif de paiement (12) comportant un écran (19), des moyens (22) d'affichage de données à l'écran,
- un dispositif informatique de téléassistance (14) relié au dispositif de paiement (12) par une liaison de données (15), comportant des moyens (54) de réception de données de fonctionnement issues du dispositif de paiement et des moyens (56) d'émission, à destination du dispositif de paiement (12), de signaux de commande dudit dispositif de paiement,
**caractérisé en ce que** le dispositif de téléassistance (14) et le dispositif de paiement (12) comportent chacun un émetteur-récepteur radioélectrique (26, 42), le dispositif de téléassistance (14) et le dispositif de paiement (12) étant reliés par une liaison radioélectrique (15), en l'absence de liaison filaire de données entre le dispositif de téléassistance (14) et le dispositif de paiement (12), et **en ce que** le dispositif de téléassistance (14) comprend des moyens (44) de simulation, à partir des données de fonctionnement reçues, du comportement du dispositif de paiement, en l'absence de l'ensemble des données relatives au comportement du dispositif de paiement échangées à l'intérieur dudit dispositif de paiement.

2. Système (10) selon la revendication 1, dans lequel les moyens de simulation (44) sont propres à simuler une image des données affichées par les moyens d'affichage (22) sur l'écran du dispositif de paiement (12).

3. Système (10) selon la revendication 2, dans lequel les moyens de simulation (44) sont propres à simuler l'image des données affichées par les moyens d'affichage (22) sur l'écran du dispositif de paiement, en l'absence de la transmission de l'ensemble desdites données affichées par le dispositif de paiement (12) à destination du dispositif de téléassistance (14).

4. Système (10) selon l'une quelconque des revendications précédentes, dans lequel le dispositif de téléassistance (14) comporte un serveur de téléassistance relié par une liaison Internet à un serveur distant comportant l'émetteur-récepteur radioélectrique (42), le serveur de téléassistance comportant les moyens de simulation (44).

5. Système (10) selon l'une quelconque des revendications précédentes, comprenant en outre au moins un client web (16) propre à être utilisé par un opérateur de téléassistance (17), le ou chaque client web (16) étant relié au dispositif de téléassistance (14) par l'intermédiaire du réseau Internet (18).

6. Système (10) selon la revendication 5, dans lequel le dispositif de téléassistance (14) comporte des moyens (58) de transfert, à destination du client web (16) correspondant, de données relatives au comportement simulé par les moyens de simulation (44).

7. Système (10) selon l'une quelconque des revendications précédentes, dans lequel le dispositif de téléassistance (14) comprend des moyens (60) d'envoi d'une requête de l'adresse web du dispositif de paiement (12).

8. Système (10) selon l'une quelconque des revendications précédentes, dans lequel l'adresse web du dispositif de téléassistance (14) est prédéterminée et stockée dans une mémoire du dispositif de paiement (12).

9. Système (10) selon l'une quelconque des revendications précédentes, dans lequel le dispositif de paiement (12) comporte des moyens (36) de transmission de la voix par le protocole de l'internet propres à permettre une communication vocale entre un utilisateur (30) du dispositif de paiement et un opérateur de téléassistance (17).

10. Système (10) selon l'une quelconque des revendications précédentes, dans lequel le dispositif de paiement (12) est un horodateur de stationnement disposé en voirie.
